# EUROPEAN PATENT APPLICATION

(11) **EP 0 618 104 A1**
(43) Date of publication of application: **05.10.1994**
(21) Application number: 93830144.7
(22) Date of filing: 02.04.1993
(51) Int. Cl.: B60P 1/16

(54) **Trilateral tipping dump body foreseen two pistons with selected intervention**

(71) Applicant: CARROZZERIA BACCHI Srl, I-06012 Città di Castello (IT)
(72) Inventor: Bigi, Giovanni, I-06012 Citta' di Castello (Perugia) (IT)
(74) Representative: Sassatelli, Franco T., Dr.

(57) **Abstract**

Foreseen on a truck frame a second frame (2) with bearing plates, front (3) and back (4), of a dump body fitting with pistons front (8) and back (9). Said pistons (8 and 9) permit the tippings of the dump body both back and sides. For the back tipping the couple of overturning pins is positioned into seats of the dump body, so blocking the hinge the same dump body over the back bearing plate (4), then the pneumatic cocks of the hydraulic plant are started. For the side tipping one of the pin is taken out from one seat relating to the hoisting side desired, and said pin is inserted into one of the front seats.

## Description

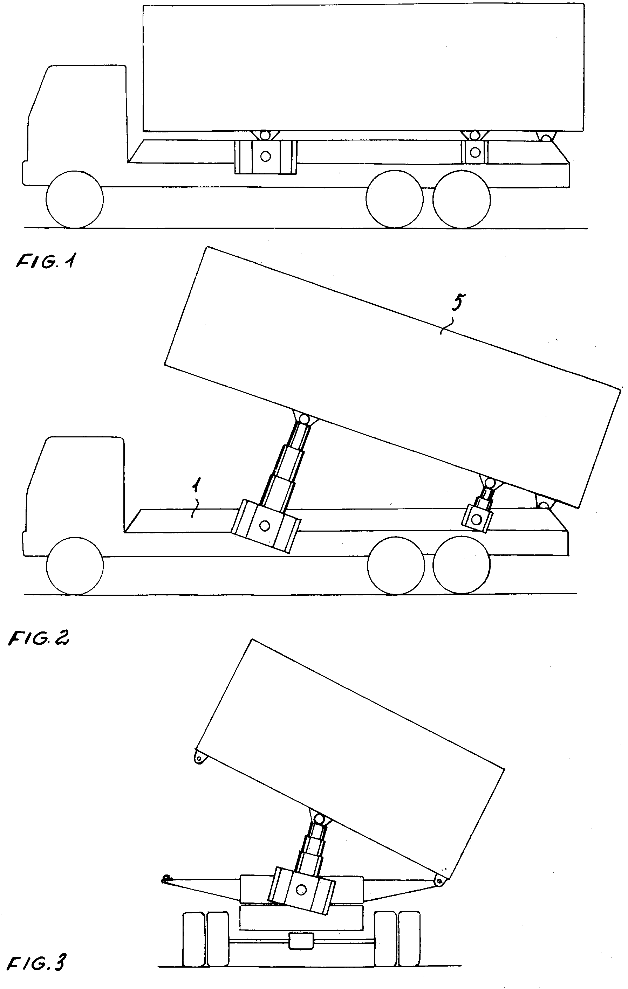

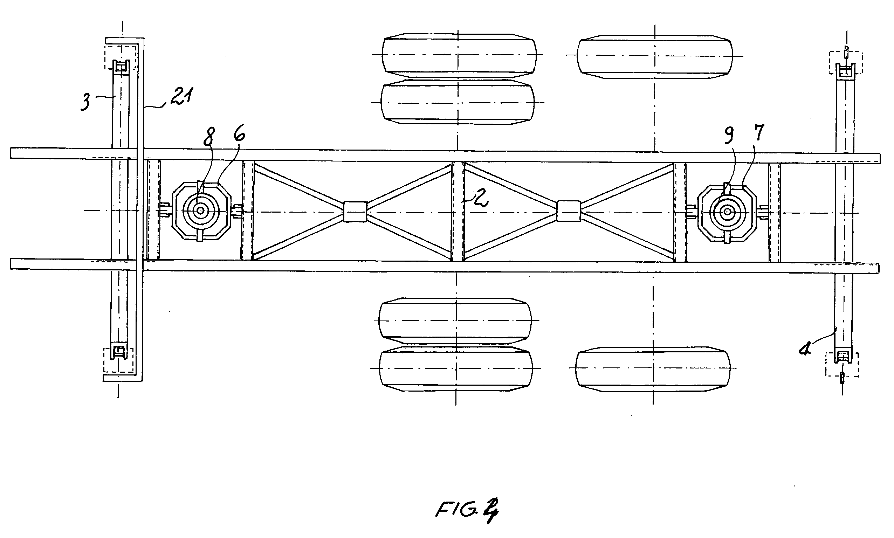

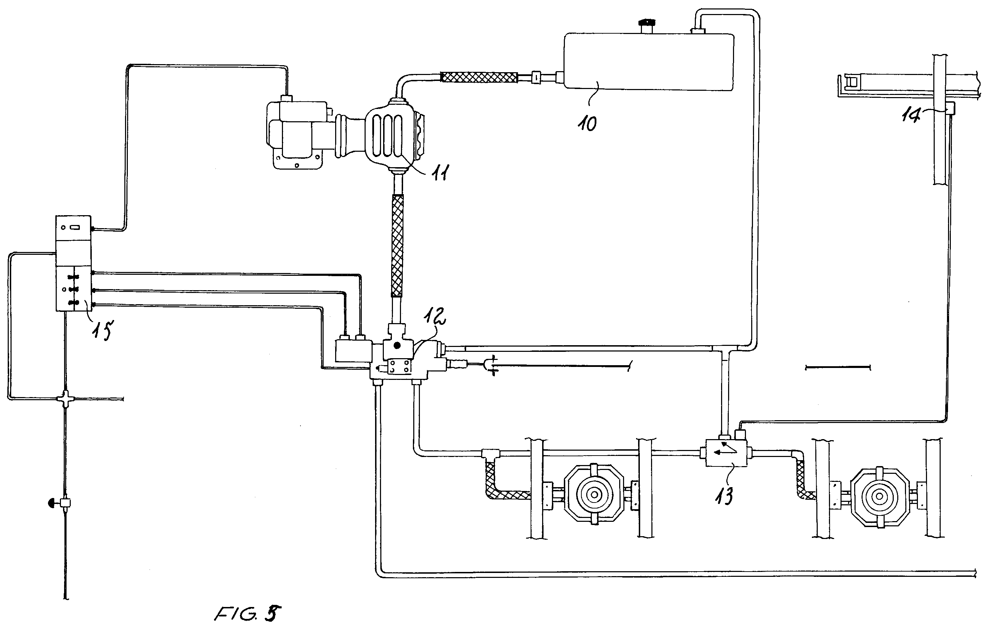

The invention refers to a trilateral tipping system for dump bodies of trucks which permits to select the starting, in the back tipping, of one of the two pistons and in the side one of both the automatic hoisting pistons by means of a device which permits the hinged pin fitting up into the front bearing plate right or left of the dump body. Current are known three different kinds of dump body tipping: a back tipping, by means of one or more pistons foreseen in front position, a bilateral tipping, with one or more pistons longitudinally placed, and a trilateral tipping by means of one or more pistons with longitudinal placing, almost central, and with simultaneous driving supported on a oscillating ring system for the inclination variability. This last system permits an use versatility but the central placing of the hoistingpistons involves the necessity to foresee dump bodies with high resistance and weight. Moreover said hoisting piston central placing brings to need, in the particular long dump bodies, of pistons of high dimensions and consequently it needs of a frame very high. The invented system realizes jointly the back tipping, by means of a hoisting piston front longitudinal placed, and the bi-side tipping, using two or more pistons positioning in lenght, by means of a new hoisting system where in the back tipping acts only one piston while in the side tippings act both or all the pistons. In comparison with the current system, using pistons with simultaneous action, the invented system foresees the under cited advantages to be particularly noted in the trucks with big dimension and capacity: a) the resistence structure of the tipping dump body has a shape more easy and light such, on the longitudinal section, it foresees two support points good positioned both during the side tipping, where both the pistons are acting, than during the back tipping where only the front piston acts with back hinge bearing; b) it is permited to realize bigger dump bodies so to optimize the thrust points that the invented means permits; c) the optimal position of the thrust points makes better also the vehicle stability during the tipping; d) the less hoisting stress permits to use a lower pression into the oildynamic circuit; e) to contain at the minimum the height of the tipping plane also when, corresponding to the dump body central area, the truck frame does not permit the piston housing such the longer front piston is displaced forward in an area where the frame has not cluttered parts, between the backstays and the drive shaft, and the back piston being short does not stretch out lower down from the dump body frame. On the truck frame 1 is mounted a second frame 2, with front transversal bearing plate 3 and back transversal bearing plate 4, of a dump body 5 and are mounted, on oscillating ring devices 6 and 7, the pistons front 8 and back 9. For the hoisting of the dump body 5 is foreseen a hydraulic device comprising an oil tank 10, a group foreseen the truck drive shaft and the hydraulic pump 11, a pneumatic drive hydraulic distributor 12, a pneumatic drive deflector 13, a pneumatic cock 14 and a group of pneumatic cocks 15. To hoist the dump body is acted on the pneumatic cocks 15 sending oil under pressure to the front piston 8 and at the same time to the back piston 9 if the deflector 13 is activated by the pneumatic cock 14 which takes the overturning pin position which can be placed to the end right or left of the front transversal bearing plate 3. For the back tipping the couple of overturing pins 16 is positioned into their seats 17 and 18 of the dump body frame, so blocking at hinge the same dump body over the back bearing plate 4 and it is started the pneumatic cooks 15 of the hydraulic plant. For the side tipping one of the pin 16 is taken out from its seat 17 or 18, relating to the hoisting side desired, and said pin 16 is inserted into one of the front seats 19 or 20. To make this a rod 21 is rotated, supported on plane to the dump body frame, which drives the pneumatic cook 14 so moving the connection, through deflector 13, of the back piston 9 from the oil tank 10 to the hydraulic distributor 12 where comes the oil under pressure by the hydraulic pump 11. Execution version of the device is illustrated in schematic view in drawings of the sheets 1, 2 and 3. In sheet 1 fig. 1 is view of a truck in motion condition. Fig. 2 is view of a truck with its dump body during back tipping. Fig. 3 is view of a truck with its dump body during side tipping. In sheet 2 fig. 4 is top view of the dump body frame, with the wheels in their position, to show the hoisting pistons, the dump body bearings and the selected device. In sheet 3 fig. 5 is schematic view of the hydraulic plant for the hoisting system of the tipping dump body.

## Claims

1. Trilateral tipping dump body foreseen two pistons with selected intervention mounted on truck frame (1) foreseen a second frame (2) with bearing plates front transversal (3) and back transversal (4) for the dump body (5), oscillating ring devices (6 and 7) bearing the pistons front (8) and back (9) and for the hoisting of the dump body (5) a hydraulic device, characterized by that to hoist the dump body (5) is acted on the pneumatic cocks (15) sending oil under pressure to the front piston (8) and at the same time to the back piston (9) if the deflector (13) is activated by the pneumatic cock (14) which takes the overturning pin position; for the back tipping the couple of overturning pins (16) is positioned into the seats (17 and 18) of the dump body frame, so blocking at hinge the same dump body over the back bearing plate (4), and it is started the pneumatic cocks (15) of the hydraulic plant; for the side tipping one of the pin (16) is taken out from its seat (17 or 18) and said pin (16) is inserted into one of the front seats (19 or 20); to make this a rod (21) is rotated which drives the pneumatic cock (14) so moving the connection, through deflector (13), of the back piston (9) from the oil tank (10) to the hydraulic distributor (12) where comes the oil under pressure by the hydraulic pump (11).

2. Trilateral tipping dump body foreseen two pistons with selected intervention, according to claim 1), in that the the hydraulic device consists of an oil tank (10), a group foreseen the truck drive shaft and the hydraulic pump (11), a pneumatic drive hydraulic distributor (12), a pneumatic drive deflector (13), a pneumatic cock (14) and a group of pneumatic cocks (15).
